Europäisches Patentamt

European Patent Office

Office européen des brevets

(11) Publication number: **0 568 980 A1**

# EUROPEAN PATENT APPLICATION

(21) Application number: **93107225.0**

(22) Date of filing: **04.05.93**

(51) Int. Cl.5: **C01B 17/04**

(30) Priority: **05.05.92 US 880075**

(43) Date of publication of application:
**10.11.93 Bulletin 93/45**

(84) Designated Contracting States:
**BE DE ES IT NL PT**

(71) Applicant: **PRAXAIR TECHNOLOGY, INC.**
**39 Old Ridgebury Road**
**Danbury, CT 06810-5113(US)**

(72) Inventor: **Reisinger, Douglas Ronald**
**2174 Phillips Court**
**Oakville, Ontario(CA)**
Inventor: **Drnevich, Raymond Francis**
**5850 Creekview Drive**
**Clarence Center, New York 14032(US)**

(74) Representative: **Schwan, Gerhard, Dipl.-Ing.**
**Elfenstrasse 32**
**D-81739 München (DE)**

(54) **Combustion of H2S and its associated Claus process.**

(57)  The invention relates to a process for combusting a fluid stream containing at least about 20% by volume of $H_2S$ in the presence of an oxidant having an oxygen concentration of about 25% to about 100% in a combustion zone in which at least a portion of $H_2S$ is combusted to $SO_2$, comprising introducing about 0.05 k mole to about 0.35 k mole of sulfur dioxide for every one kilomole of $H_2S$ in said fluid stream whereby the temperature of said combustion zone is maintained at or below the temperature limit set by refractories employed in said combustion zone. The sulfur dioxide introduced into the combustion zone is produced from a particularly arranged Claus process.

Field of the Invention

The invention relates to the combustion of $H_2S$ containing gas streams and its associated Claus process.

Background of the Invention

Large volumes of hydrogen sulfide and ammonia containing gas streams are produced in various plants including petroleum refineries and natural gas purification plants. Hydrogen sulfide and ammonia, if released to the atmosphere, are hazardous to the environment. Due to their toxicity, they pose extreme danger to people's health.

It has been known to combust these hydrogen sulfide containing gas streams, not only to inhibit the emission of pollutants, but also to produce sulfur which is useful for making, inter alia, papers, fumigants, sulfuric acid, tires, fertilizers and gunpowder. This combustion is usually carried out in the presence of air. When it is used in conjunction with the Claus sulfur process, a feed gas containing hydrogen sulfide is partially combusted with air to form sulfur dioxide in a combustion zone. The amount of air present is such that it provides a sufficient amount of oxygen to combust about one-third of the hydrogen sulfide in the incoming feed gas and to also decompose any ammonia gas to nitrogen and steam vapour. The resulting gas in the combustion zone may also contain sulfur and water due to a portion of the uncombusted hydrogen sulfide reacting with sulfur dioxide. The sulfur in the resulting gas may be recovered in liquid form through cooling. The resulting gas is then commonly passed through two or more catalyst reactor beds to produce additional sulfur by promoting the reaction between previously unreacted hydrogen sulfide and sulfur dioxide.

The combustion of $H_2S$ containing gas streams in the presence of air, however, is found to be inefficient. Since air contains only about 21 percent oxygen, a significant amount of unneeded nitrogen is provided to the combustion zone or its associated Claus sulfur process system. As the hydrogen sulfide concentration level in the feed gas or the need for a higher feed gas processing rate increases, a greater amount of oxygen would be required, thus passing or providing an even greater amount of unneeded nitrogen inherently present in the air into the combustion zone and/or its associated system. The increased flow of nitrogen increases the pressure drops in the combustion zone and its associated system, reduces the residence time of the reactants in the combustion zone and increases the gas volume to be treated in the combustion zone and its associated system.

To reduce the flow or the presence of unproductive nitrogen in the combustion zone and its associated system, the employment of oxygen or oxygen enriched air as the oxygen source has been proposed. U.S. Patent No, 4,138,473 - Gieck, for example, discloses the use of pure oxygen for combusting a $H_2S$ containing feed gas in the presence of recycled sulfur dioxide from the conventional Claus processing system. The recycled $SO_2$ is derived from a downstream portion of the conventional Claus processing after reacting most of the $H_2S$ and $SO_2$ in the combusted gas over a plurality of catalytic converter beds. This technique, although reduces the amount of nitrogen which is introduced into the combustion zone and its associated system and reduces the pollutants ($SO_2$) resulting therefrom, fails to address a problem associated with a temperature increase in the combustion zone. The temperature of the combustion zone can exceed the temperature tolerance of the refractories in the combustion zone when the feed gas containing a large concentration of $H_2S$ (greater than 50% $H_2S$) is combusted in the presence of pure oxygen or oxygen enriched air.

Upon recognizing the problem of high combustion zone temperatures, the employment of various temperature moderating additives in the combustion zone of the Claus process system has been proposed. U.S. Patent No. 4,888,162 - Brian, for example, discloses water as a temperature moderating additive in the combustion zone. On the other hand, U.S. Patent No. 4,849,203 -Palm discloses various diluents including one containing sulfur dioxide as a temperature moderating additive. These additives, which are used as an internal heat sink, absorb some of the heat released during the combustion of $H_2S$, thus moderating the temperature of the combustion zone. The introduction of these additives, however, would increase unneeded gas in the combustion zone and its associated system without imparting any efficiency. The amount of the additives necessary to act as an internal heat sink may be such that it may cause the very problems which were avoided by removing nitrogen from the oxygen source (air). Thus, there is a need to find ways in which the $H_2S$ combustion and its associated Claus process can be carried out in an efficient manner without causing the problems associated with the overflow of unneeded or unproductive substances.

Accordingly, it is an object of the invention to minimize the presence of unproductive substances which can cause the increased pressure drops, the decreased residence time for reactants and the increased fluid load in a combustion zone and its associated Claus process.

It is another object of the invention to maintain the temperature of a combustion zone at or below the temperature limit set by the refractories in the combustion zone.

It is yet another object of the invention to increase overall sulfur recovery efficiency when the combustion of $H_2S$ containing gas streams is carried out in the context of the Claus process.

It is a further object of the invention to reduce the emission of pollutants ($H_2S$ or $SO_2$) to the atmosphere.

It is an additional object of the invention to reduce the equipment and energy cost associated with the Claus process.

Summary of the Invention

The above objects and other objects which will become apparent to one skilled in the art upon a reading of this disclosure is attained by the present invention which comprises:

A process for combusting a fluid stream containing at least about 20% by volume of $H_2S$ in the presence of an oxidant having an oxygen concentration of greater than 21% in a combustion zone in which at least a portion of $H_2S$ is combusted to $SO_2$, comprising introducing into said combustion zone about 0.05 kilomole to about 0.35 kilomole $SO_2$ per every one kilomole of $H_2S$ in said fluid stream whereby the temperature of the combustion zone is maintained at or below the temperature limit set by refractories in the combustion zone. The amount of $SO_2$ introduced to achieve the necessary temperature limit in the combustion zone is obtained from a particular Claus process. The Claus process involves receiving at least a portion of the resulting gas from the combustion zone to a thermal zone where at least a portion of sulfur dioxide and uncombusted $H_2S$ therein are reacted to form sulfur and water, cooling at least a portion of the gas derived from the thermal zone to remove sulfur therein in liquid form, reacting the sulfur removed gas in a single catalytic converter stage to promote the reaction between any unreacted sulfur dioxide and $H_2S$ therein to form additional sulfur, cooling at least a portion of the gas formed in the catalytic stage to remove sulfur therein in liquid form, combusting the additional sulfur removed gas in the presence of oxidant to convert any $H_2S$ therein to sulfur dioxide in an incinerator and treating the gas formed in the incinerator for the selective recovery of sulfur dioxide which is used in the combustion zone. The use of a single catalytic stage in conjunction with a particular selective $SO_2$ recovery increases the sulfur recovery and imparts the required amount of $SO_2$ to the combustion zone such that the temperature therein does not exceed the temperature tolerance of the refractories used to build the combustion zone.

As used herein, the term "fluid" includes gases, liquids or mixtures thereof.

As used herein, the term "oxidant" means an oxygen bearing and/or oxygen containing substance.

Brief Description of the Drawings

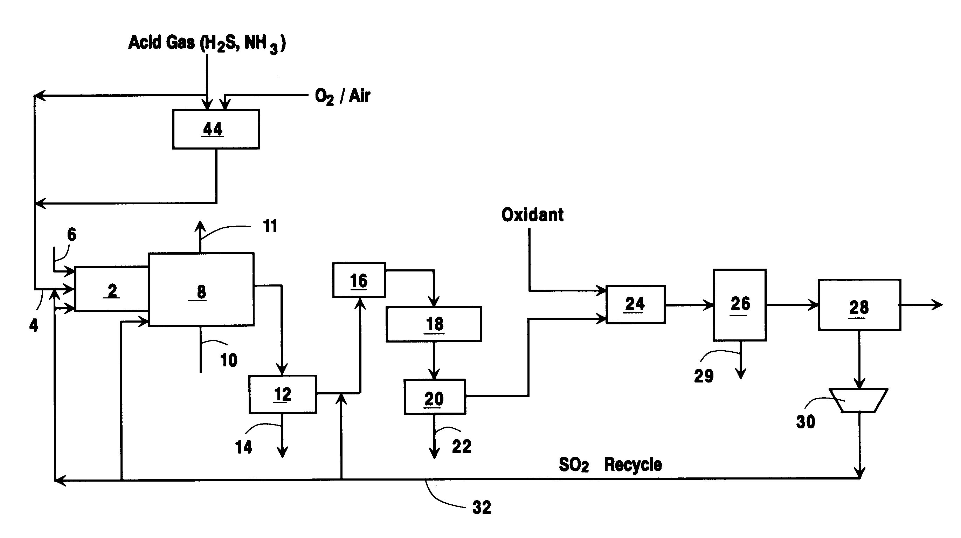

The sole Figure is a schematic flow diagram of one preferred embodiment of the process of this invention.

Detailed Description of the Invention

The invention involves utilizing a particular amount of sulfur dioxide, which is sufficient to relieve the temperature increase associated with an exothermic reaction which is caused by the conversion of $H_2S$ to $SO_2$ in the presence of pure oxygen or oxygen enriched air. By providing the particular amount of $SO_2$ into the combustion zone, the conversion of $H_2S$ to $SO_2$ can be minimized during the combustion, thus reducing any heat resulting from the exothermic reaction. The $SO_2$ added to the combustion zone may be generated in a particularly arranged Claus processing system such that a valuable product (sulfur) can be recovered in an efficient manner with the minimum emission of pollutants to the atmosphere. When the particularly arranged Claus process is used, the addition of sulfur dioxide to the combustion zone not only serves to inhibit the temperature increase therein but also serves to maximize the recovery of sulfur in the Claus process through providing the desired $H_2S/SO_2$ ratio in a catalytic stage.

Referring now to the Figure, there illustrates one preferred embodiment of the invention wherein the combustion of $H_2S$ containing gas streams is carried out in the presence of pure oxygen or oxygen enriched air as a part of the preferred Claus process. A feed gas having a hydrogen sulfide content of about 20 to about 100% by volume, preferably about 50% to about 100% by volume, is introduced to a reactor furnace (2) having a combustion zone through line (4) at a pressure of about 2 to about 20 psig. The feed gas may be preheated by a heating means (44) to a temperature of about 40°C to about 120°C prior to the introduction in the reactor furnace (2). A recycle stream in line (32) is either introduced directly into the reactor furnace (2) and/or introduced into the line (4) at a pressure of about 2 to 20 psig, or introduced into the waste heat boiler (8) and/or into the heater exchanger (16). The temperature of the recycle stream is within the range of about 30°C to about 100°C. The recycle stream contains a sufficient amount of $SO_2$ to inhibit the temperature in the furnace (2) from rising above about 1500°C-1800°C, thus preventing any deleterious effect on the refractories of the furnace (2). At least a portion of $SO_2$ needed, however, may also be generated through combusting a portion of $H_2S$ during the preheating of the feed gas. The amount of $SO_2$ in the recycle, stream and/or the feed gas is such that about 0.05 Kilomole to about 0.35 Kilomole of $SO_2$, preferably about 0.05 Kilomole to about 0.15 Kilomole of $SO_2$, can be introduced into the furnace (2) for every one K mole of $H_2S$ provided in the feed gas. The recycled stream preferably consists essentially of $SO_2$ so that the introduction of unneeded gas in the furnace (2) is minimized. An oxidant having a higher concentration of oxygen than air, preferably technically pure oxygen or an oxidant having an oxygen concentration of at least about 25% by volume, e.g. about 50% to about 100% by volume, is also introduced into the furnace (2) through line (6), thereby combusting $H_2S$. The amount of $H_2S$ combusted is such that a gas having the desired $H_2S/SO_2$ ratio of about 2:1 is formed when $SO_2$ introduced in the form of a recycle stream and the $SO_2$ formed through the combustion are combined. At least a portion of $SO_2$ reacts with uncombusted $H_2S$ to form sulfur in the furnace (2). The reactions in the furnace may be characterized by the following equation:

$$H_2S + 3/2\ O_2 \rightarrow SO_2 + H_2O$$
$$2H_2S + SO_2 \rightarrow 3/2\ S_2 + 2H_2O$$

Subsequently, the resulting reactor furnace effluent is delivered to a heat exchanger or waste heat boiler (8). In the waste heat boiler (8), the combustion effluents are cooled against boiler feed water in line (10), thereby producing the cooled effluents having a temperature of about 300 to about 500°C and boiler steam which can be recovered from line (11). When the feed gas introduced into the furnace (2) contains a lower concentration of $H_2S$, at least a portion of the $SO_2$ containing stream from the line (32), may be directly introduced into the waste heat boiler (8) in order to reduce gas flow in the furnance (2).

The cooled effluents from the waste heat boiler (8) are then introduced into the first condenser (12) whereby the effluents are further cooled to produce liquid sulfur which is recovered from line (14). The uncondensed effluents from the condenser (12) are heated with or without the presence of $SO_2$ from the line (32), in a heat exchanger (16) to provide an effluent stream having a temperature of about 300 to about 400°C which is above the sulphur dewpoint of the gas stream. When the feed gas introduced into the furnance (2) contains a lower concentration of $H_2S$, at least a portion of the $SO_2$ containing gas stream can be directly introduced into the heat exchanger (16) from the line (32) in order to reduce gas flow in the furnance (2) and the waste heat boiler (8). The heat exchanger (16) may utilize heat recovered from the waste heat boiler (8) and/or the furnace (2). The uncondensed effluent stream, for example, may be indirectly heat exchanged with the combustion effluent in the furnace (2) or the wall of the furnace (2) to obtain the desired temperature.

Once the uncondensed effluent stream is heated to the desired temperature range, it is fed to a catalytic converter bed (18). In the catalytic converter bed (18), previously unreacted $H_2S$ and $SO_2$ are reacted to form additional sulfur. The reaction may be characterized as follows:

$$2H_2S + SO_2 \rightarrow 3/8\ S_8 + 2\ H_2O$$

The reaction effluents resulting from the catalytic converted bed (18) are cooled in the second condenser (20) to recover additional sulfur in liquid form from line (22).

Any uncondensed effluent stream from the condenser (20) is delivered to an incinerator (24). The uncondensed effluent stream may contain. inter alia, hydrogen sulfide, carbon dioxide, $H_2O$ and sulfur dioxide. Through incinerating the effluent stream in the presence of an oxidant, $H_2S$ in the effluent stream is converted to sulfur dioxide, thereby producing a gas stream substantially free of $H_2S$. The preferred oxidant employed in the incinerator (24) has an oxygen concentration of greater than 21%. As the concentration of oxygen in the oxidant increases, of course, any unneeded or unproductive gas in the system is decreased correspondingly.

The gas stream from the incinerator (24) may be sent directly to an absorption unit (28) or may be cooled to remove water through a line (29) via a third condenser (26) prior to its introduction into the absorption unit (28). The absorption unit described in Union Carbide Canada Limited Brochure, "Cansolv; a Revolutionary New Flu Gas Scrubbing Technology" and/or U.S. Patent No. 3,904,735 - Atwood et al., which is herein incorporated, is preferred. In general, the absorption unit (28) comprises a Tail Gas conditioning section (including a water and incinerator gas cooler, an incinerator gas condenser, water transfer pumps, boiler feed water pumps and tanks, an incinerator and an incinerator waste heat boiler) and a sulphur recycle section (including a contactor tower, a regenerator tower, a reflux tank, a cansolv tank, reboilers and pumps, a lean rich exchanger aerial cooler, a lean amine cooler and reflux Condenser and a recycle blower).

In the absorption unit (28), the gas stream entering at a temperature of below about 100°C through an contactor tower is counter currently contacted with an absorbent comprising at least one amine compound. Through such a contact, about 90% to 100% of $SO_2$ in the gas stream can be recovered. Other tail gas treatment systems, however, may be used to replace the absorption unit (28) if they can recover a high percentage of $SO_2$ in the gas stream in a commercially feasible manner. The $SO_2$ recovered through selective separation is delivered through line (32) to the furnace (2), the waste heat boiler (8) and/or the heat exchanger (16) at a pressure of about 2 psia to 20 psia via a recycle blower (30) while the remaining gas, which is substantially free of $SO_2$, is vented or discharged to the atmosphere.

The following examples serve to further illustrate the invention. They are presented for illustrative purposes and are not intended to be limiting.

## Example 1

An acid gas having $H_2S$ was treated in the Claus process system shown in the Figure. The conditions utilized and the products recovered in each unit of the system are tabulated in Table I below:

TABLE I

| Stream # Name | (1) Main O$_2$ | (2) Acid Gas | (3) SO$_2$ Recy | (4) RxN Fur | (5) WHE Out | (6) TCD | (7) CVI In | (8) CVI Out | (9) CDI Out | (10) Inc. In | (11) Inc O$_2$ | (12) Inc Out | (13) H$_2$O Cond | (14) SO$_2$ Absor |
|---|---|---|---|---|---|---|---|---|---|---|---|---|---|---|
| Temp °C | 40 | 40 | 40 | 1326 | 315 | 190 | 232 | 381 | 177 | 177 | 40 | 1156 | 55 | 55 |
| **Flow (k moles/Hr)** | | | | | | | | | | | | | | |
| H$_2$S | - | 200 | - | 51.3 | 51.3 | - | 51.3 | 17.82 | - | 17.82 | - | - | - | - |
| SO$_2$ | - | - | 27.2 | 26.43 | 26.43 | - | 26.43 | 8.91 | - | 8.91 | - | 28.48 | - | 28.48 |
| CO$_2$ | - | 50 | - | 45.84 | 45.84 | - | 45.84 | 47.38 | - | 47.39 | - | 47.39 | - | 47.39 |
| H$_2$O | - | - | 4.8 | 142.40 | 142.40 | - | 142.40 | 175.88 | - | 175.88 | - | 204.80 | 204.80 | - |
| O$_2$ | 65.94 | - | - | - | - | - | - | - | - | - | 39.82 | 5.78 | - | 5.78 |
| COS | - | - | - | 1.55 | 1.55 | - | 1.55 | .01 | - | .01 | - | - | - | - |
| H$_2$ | - | - | - | 11.10 | 11.10 | - | 11.10 | 11.10 | - | 11.10 | - | - | - | - |
| CO | - | - | - | 2.61 | 2.61 | - | 2.61 | 2.61 | - | 2.61 | - | 2.61 | - | 2.61 |
| Sx | - | - | - | 73.9 | 20.95 | - | .47 | 8.81 | - | .24 | - | - | - | - |
| Sl (Liquid) | - | - | - | - | - | 144.1 | - | - | 55.30 | - | - | - | - | - |
| Tot kmol/hr | 65.94 | 250 | 32 | 355.1 | 302.18 | 144.61 | 281.70 | 272.53 | 55.30 | 263.95 | 39.82 | 9.07 | 204.80 | 84.21 |
| H (GJ/Hr) | 0 | -23.6 | -9.2 | -32.8 | -55.8 | 1.0 | -59.7 | -59.7 | 0.4 | -63.0 | 0 | -63.0 | -58.1 | -27.3 |
| H+ Duty (Kw) | - | - | - | - | -6386 | -933 | - | - | -837 | - | - | - | -6168 | - |
| Conv - Cuml | - | - | - | 65.10 | - | - | - | 88.23 | - | - | - | - | - | - |

Overall Sulphur Recovery = 99.7%+

* SO$_2$ Recy = SO$_2$ Recycle
* RxN Fur = Reactor Furance (2)
* WHE = Waste Heat Exchanger on Boiler (8)
* TCD = the first condenser (12)
* CVI = catalytic converter bed (18)
* CDI = the second condenser (20)
* Inc = Incinerator (24)
* H$_2$O Cond = water condenser (26)
* SO$_2$ absor = absorber unit (28)
* Sx = sulfur in the form of $S_1$ to $S_8$
* Sl = sulfur liquid
* Tot K mol/hr = total kilo moles per hour
* H (GJ/Hr) = Heat duty in Giga Joules per hour
* H+ Duty Kw = Heat duty in Kilowatts
* Conv - Cuml = Cumulative sulphur conversion

As shown in Table I, the combustion of H$_2$S can be carried out in the presence of technically pure oxygen without causing deleterious effect on the refractories of the furnace when a particular amount of SO$_2$ is provided in the furnace. Through utilizing a gas consisting essentially of a particular amount of SO$_2$, the furnace and the associated units are free or substantially free of unneeded gases, thereby increasing the capacity for an acid feed gas, i.e., H$_2$S to be treated. These advantages are attained along with the increased sulfur recovery (99.7% +).

Example 2

An acid gas feed having about 80% of H$_2$S was combusted with air in the conventional Claus process system having three catalytic converter stages. After retrofitting the conventional Claus process system to provide the Claus process system of the Figure herein, the same gas was combusted in the presence of oxygen. The results of the process simulation are tabulated in Table II below:

## TABLE II

| Item | Basic Design | Retrofitted Expansion | Change |
|---|---|---|---|
| Process Type | 3 Catalytic Stages with Air | 1 Catalytic Stage + $SO_2$ Recycle + $O_2$ | |
| Acid Gas Feed (mols/hr) | 125 | 250 | +100% |
| A.G. Conc. (% $H_2S$) | 80% $H_2S$ | 80% $H_2S$ | — |
| Sulphur Inlet (T/D) | 76.8 | 153.6 | +100% |
| $O_2$ Concentration (%$O_2$) | 21% $O_2$ (Air) | 100% $O_2$ (Pure) | — |
| Air/$O_2$ Req.d – Main (kmols/hr) | 222 – Air | 65.9 – $O_2$ | — |
| Inc (kmols/hr) | 124 – Air | 39.8 – $O_2$ | — |
| Total (kmols/hr) | 346 | 105.7 (81 T/D) | — |
| Total Gas Flow to RF (kmols/hr) | 347 | 348 | +0% |
| Inc F.G. Flow (Kmols/hr) | 6.22 | 0 | |
| $SO_2$ Absorber Feed Flow (kmols/hr) | 304 (if installed) | 84 | −73% |
| $SO_2$ Absorber (% $SO_2$) | 0.5 (if installed) | 34.6 | — |
| Temperature – RxN Furnace (°C) | 1181 | 1326 | +135°C |
| CVI Outlet (°C) | 308 | 381 | +83°C |
| Inc Temp (°C) | 593 | 1156 | +563°C |
| Heat Duty – WHI (kw) | −4068 | −6386 | +56% |
| TCD (kw) | −620 | −932 | +50% |
| CD1 (kw) | −470 | −837 | +78% |
| CD2 (kw) | −253 | 0 | — |
| CD3 (kw) | −209 | 0 | — |
| $H_2O$ cond (kw) | – | −6168 | — |
| RH1 (kw) | +120 | +124 | +3% |
| RH2 (kw) | +107 | 0 | — |
| RH3 (kw) | +150 | 0 | — |
| Overall Sulfur Recovery (%) | 96−98% | 99.7%+ | +2−4% |

EP 0 568 980 A1

## NOTES TO TABLE II

* A.G. Conc. = Acid Gas concentration

* Air/$O_2$ req.d – air or $O_2$ required amount

* RF or RxN Furnace = Reactor Furnace

* CVI = catalytic converter stage

* CD1 = condenser which is placed just after the first catalytic stage

* CD2 = condenser which is placed just after the second catalytic stage

* CD3 = condenser which is placed just after the third catalytic stage

* RH1 = reheater placed prior to 1st catalytic stage

* RH2 = reheater placed prior to 2nd catalytic stage

* RH3 = reheater placed prior to 3rd catalytic stage

* (kw) = kilowatt (1 KW = 3414 Btu/hr)

* (T/D) = tonnes per day

* Inc = incinerator

* WHE = Waste Heat Boiler

* TCD = condenser which is placed subsequent to WHI

As shown in Table II, there are many advantages derived from utilizing the invention. The advantages include, inter alia, (1) the treatment of an increased amount of acid gas containing $H_2S$, (2) the increased recovery of sulfur (99.7% +), (3) the reduction in the equipment and energy cost due to elimination of two catalytic stages and (4) up to a 73% reduction in flow of gases to the water condenser unit and the absorption unit. All of these benefits are attained without increasing the pressure drops along the system and without causing the temperature of the reactor furnace to exceed the temperature tolerance of the refractories of the furnace, i.e., <1500°C.

Although the invention has been described in detail with reference to certain specific embodiments, those skilled in the art will recognize that there are other embodiments within the spirit and scope of the claims.

**Claims**

1. A process for combusting a fluid stream containing at least about 20% by volume of $H_2S$ in the presence of an oxidant having an oxygen concentration of about 25% to about 100% in a combustion zone in which at least a portion of $H_2S$ is combusted to $SO_2$, comprising introducing into said combustion zone about 0.05 k mole to about 0.35 k mole of sulfur dioxide for every one kilomole of $H_2S$ in said fluid stream whereby the temperature of said combustion zone is maintained at or below the temperature limit set by refractories employed in said combustion zone.

2. A process according to claim 1, wherein the temperature of the combustion zone is maintained at or below about 1500°C.

3. A process according to claim 2, wherein the sulfur dioxide introduced into the combustion zone is derived from a Claus process comprising:
   (a) receiving the resultant combustion gas containing sulfur dioxide and $H_2S$ from said combustion zone in a thermal zone where at least a portion of said sulfur dioxide and said $H_2S$ therein are

8

reacted to form sulfur and water;

(b) cooling at least a portion of the gas from step (a) to remove the sulfur therein in liquid form;

(c) reacting at least a portion of the sulfur removed gas from step (b) in a single catalytic converter stage to promote the reaction between previously unreacted sulfur dioxide and $H_2S$ therein to form additional sulfur;

(d) cooling at least a portion of the gas formed in step (c) to remove said additional sulfur therein in liquid form; and

(e) treating the sulfur removed gas from step (d) to selectively recover a gas consisting essentially of sulfur dioxide which is to be introduced in said combustion zone.

4. A process according to claim 3, wherein said sulfur removed gas from step (d) is treated in an absorber which utilizes at least one amine compound for the selective recovery of said gas consisting essentially of sulfur dioxide.

5. A process according to claim 4, further comprising combusting said sulfur removed gas from step (d) with an oxidant in an incinerator to convert any $H_2S$ therein to sulfur dioxide prior to the treatment in said absorber.

6. A process according to claim 5, wherein the oxidant used in said incinerator is oxygen enriched air or technically pure oxygen.

7. A process according to claim 6, further comprising cooling the combusted gas from said incinerator to remove water prior to the treatment in said absorber.

8. A process according to claim 1, wherein at least a portion of said sulfur dioxide introduced into the combustion zone is formed by partially combusting said fluid stream prior to its introduction in said combustion zone.

9. A process comprising:

(a) combusting a fluid stream containing at least about 50% by volume of $H_2S$ with an oxidant having an oxygen concentration of about 50% to about 100% in the presence of recycled $SO_2$ in a combustion zone, until at least a portion of $H_2S$ is converted to $SO_2$;

(b) allowing at least a portion of unconverted $H_2S$ and $SO_2$ present in said combustion zone to react with one another to form a gas containing $H_2S$, $SO_2$, sulfur and water;

(c) cooling said gas containing $H_2S$, $SO_2$, sulfur and water to in at least one condenser to recover the sulfur therein in liquid form;

(d) heating the cooled gas from said at least one condenser to provide a heated gas having a temperature about 300 to about 400°C;

(e) passing said heated gas to a single catalytic converter bed to react previously unreacted $H_2S$ and $SO_2$ therein to form additional sulfur;

(f) cooling the gas resulting from said single catalytic converter bed to separate said additional sulfur in liquid form;

(g) passing the additional sulfur removed gas to an incinerator to combust any $H_2S$ remaining therein to form a gas containing $SO_2$;

(h) selectively separating $SO_2$ from said gas containing $SO_2$ in at least one absorber which uses an absorbent comprising at least one amine compound counter currently with respect to the flow of said gas containing $SO_2$; and

(i) recycling the selectively separated $SO_2$ to said combustion zone at a pressure of about 2 psia to about 20 psia.

Acid Gas (H$_2$S, NH$_3$)

O$_2$ / Air

44

Oxidant

6

11

2

8

10

16

18

24

26

28

12

20

14

22

29

30

SO$_2$ Recycle

4

32

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 798 716 (PALM) <br> * claim 1 * | 1 | C01B17/04 |
| D | & US-A-4 849 203 | | |
| | --- | | |
| A | EP-A-0 252 497 (AIR PRODUCTS AND CHEMICALS) <br> * page 2, line 51 - page 3, line 7 * | 1 | |
| | --- | | |
| A | US-A-4 552 747 (GOAR) <br> * claim 1 * | 1 | |
| | ----- | | |

**TECHNICAL FIELDS SEARCHED (Int. Cl.5)**

C01B

The present search report has been drawn up for all claims

| Place of search | Date of completion of the search | Examiner |
|---|---|---|
| BERLIN | 18 AUGUST 1993 | CLEMENT J-P. |